# DEMANDE DE BREVET EUROPEEN

(11) **EP 3 025 839 A1**
(43) Date de publication de la demande: **01.06.2016**
(21) Numéro de dépôt: 14195324.0
(22) Date de dépôt: 28.11.2014
(51) Int. Cl.: B29C 45/14, B29D 12/02, B29L 12/00

(54) **Procede de fabrication d'un element constituant une monture de lunettes, et element obtenu par ledit procede**

(71) Demandeur: Sonthonnax, Alexandre, 1207 Genève (CH); Plastinax Austral Ltd, Moka (MU)
(72) Inventeur: Sonthonnax, M. Alexandre, 1207 Geneve (CH); Rougier Lagane, M. Didier, Floreal (MU)
(74) Mandataire: Cabinet Laurent & Charras

(57) **Abrégé**

Ce procédé de fabrication d'un élément entrant dans la constitution d'une monture de lunettes comprend les étapes consistant :
- à fabriquer par moulage par injection de matière plastique deux couches (5, 6) de l'élément à fabriquer de la monture de lunettes ;
- à surmouler à l'aide de ces deux couches (5, 6) une âme centrale (7), pour obtenir un élément de monture de lunettes comprenant trois couches dont les première et deuxième couches constituent des couches externes, et l'âme centrale constitue une couche interne.

## Description

### DOMAINE DE L'INVENTION

La présente invention se rapporte au secteur technique des montures de lunettes et concerne plus particulièrement un procédé de fabrication d'un élément constituant une monture de lunettes.

Par élément constituant une monture de lunettes on entend notamment l'une des branches, ou les deux, ou bien la partie centrale de ladite monture de lunettes recevant les verres optiques, ou solaires ou encore de protection..

L'invention concerne également un élément obtenu par le procédé de fabrication selon la présente invention.

### ETAT DE LA TECHNIQUE

Il est connu de l'état de la technique de fabriquer des montures de lunettes en plastique laminées en trois couches de différentes couleurs. Ces montures de lunettes sont généralement réalisées par usinage de plaques en matière plastique acétate laminées et déjà colorées selon la demande.

De telles montures présentent l'inconvénient de ne pas développer une bonne stabilité mécanique et qu'il arrive parfois que les couches se séparent.

Un autre inconvénient réside encore dans le fait que les montures de l'état de la technique se décolorent parfois avec le temps.

Un autre inconvénient réside dans le fait que les concepteurs de montures de lunettes de l'état de la technique sont limités dans le choix des couleurs et font plutôt preuve de créativité dans la forme desdites montures pour améliorer leur nombre de vente.

### EXPOSE DE L'INVENTION

L'un des buts de l'invention est donc de remédier à ces inconvénients en proposant un procédé de fabrication d'un élément constituant une monture de lunettes possédant une bonne stabilité mécanique et physico-chimique et qui permette de varier d'une manière quasi infinie les couleurs dudit élément.

Un autre objectif de l'invention est de fournir un tel procédé de fabrication qui soit facile à mettre en oeuvre et d'un coût de fabrication économiquement compatible avec les besoins du marché.

Un autre objectif de l'invention est de fournir un élément de monture qui ne se décolore pas avec le temps.

A cet effet, et conformément à l'invention, il a été mis au point un tel procédé remarquable en ce qu'il comprend les étapes consistant en premier lieu à fabriquer, par moulage par injection de matière plastique, deux couches de l'élément à fabriquer de la monture de lunettes. Le procédé selon l'invention comprend ensuite l'étape consistant à surmouler une âme centrale, réalisée en matière plastique, lesdites première et deuxième couches étant disposées de part et d'autre de cette âme centrale.

Selon l'invention, l'âme centrale est réalisée en matière plastique, et est également fabriquée par moulage par injection de matière plastique, dans un troisième moule, de telle sorte à constituer une troisième couche de l'élément à fabriquer, surmoulée des première et deuxième couches disposées de part et d'autre de ladite troisième couche.

Selon ce procédé, on obtient un élément de monture de lunettes comprenant trois couches, dont les première et deuxième couches constituent des couches externes, et la troisième couche constitue une couche interne.

Selon cette première forme de réalisation, les trois couches précitées sont conformées lors de l'injection par moulage, selon la forme souhaitée de l'élément de la monture de lunettes à réaliser.

Selon une seconde forme de réalisation de l'invention, les trois couches sont réalisées par injection sous la forme de plaque. En d'autres termes, elles ne sont pas conformées lors de leur injection selon la forme souhaitée de l'élément à réaliser. La plaque tri-couches alors obtenue est usinée afin alors de pouvoir lui conférer ladite forme souhaitée de l'élément de monture de lunettes.

Ce mode de réalisation permet de diminuer le coût de l'outillage, et notamment des moules, et permet en outre de réaliser de petites séries avec des frais d'outillages réduits.

Le procédé selon l'invention permet la fabrication en masse de l'élément en question d'une monture de lunettes. Le procédé permet à la fois de conférer une forme spécifique à l'élément, mais aussi d'obtenir une bonne fusion des trois couches constitutives de l'élément, ce qui assure une excellente stabilité mécanique et physico-chimique dudit élément.

Selon l'invention, les première et deuxième couches sont fabriquées dans deux moules distincts, afin de pouvoir fabriquer en même temps les première et deuxième couches, et ainsi de diminuer le temps total de fabrication de l'élément de monture de lunettes et notamment améliorer la rentabilité.

De préférence, les couches injectées sont colorées dans la masse de la matière fondue par l'usage de colorants liquides dépourvus de tout métal lourd. L'élément de monture de lunettes obtenu possède ainsi une couleur uniforme, sans veine apparente, tâches ou autre défaut résultant de la coloration. Le mélange de colorants liquides et de matière plastique permet de fabriquer des éléments de monture de lunettes en une variété infinie de couleur selon la demande.

Le risque de décoloration est donc éliminé. De plus, ces colorants sont dépourvus de tout métal lourd, et sont de ce fait conformes à la réglementation en vigueur.

De préférence, les première, deuxième, et troisième couches sont obtenues par injection de matière polyamide, et avantageusement de polyamide 12. D'autres matières plastiques peuvent cependant être envisagées.

L'utilisation d'un polyamide 12 est avantageuse car ce matériau possède des propriétés remarquables. En effet, il est résistant aux déformations sous la chaleur et est relativement stable face aux agents chimiques. De plus, sa transparence exceptionnelle parmi les matières plastiques actuelles permet la possibilité d'utiliser des colorants qui font varier non seulement sa teinte cristalline mais également son opacité.

De préférence, l'élément fabriqué est ensuite revêtu d'un vernis, et avantageusement d'un vernis à base de polyuréthane.

Cette caractéristique permet notamment de protéger la surface de l'élément en question, mais également de lui donner un aspect neuf avec une durée de vie raisonnable. Le vernissage permet d'avoir un élément avec une finition brillante ou mate selon la demande.

Selon une variante de l'invention, l'âme centrale est constituée d'un insert métallique plein ou pourvu d'orifices traversants est surmoulé par lesdites première et deuxième couches.

L'invention concerne également un élément constituant une monture de lunettes, tel que par exemple l'une des branches, ou bien le support central des verres optiques, solaires ou de protection, comprenant deux couches externes en matière plastique surmoulées sur une troisième couche interne en matière plastique.

### BREVE DESCRIPTION DES FIGURES

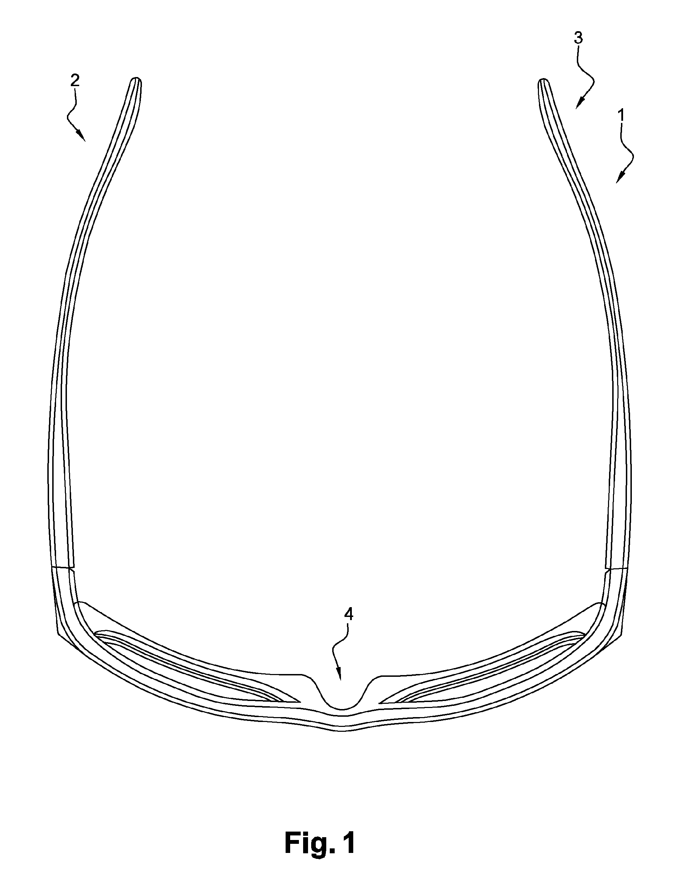

La figure 1 est une représentation schématique vue du dessus d'une monture de lunettes réalisée conformément à l'invention.

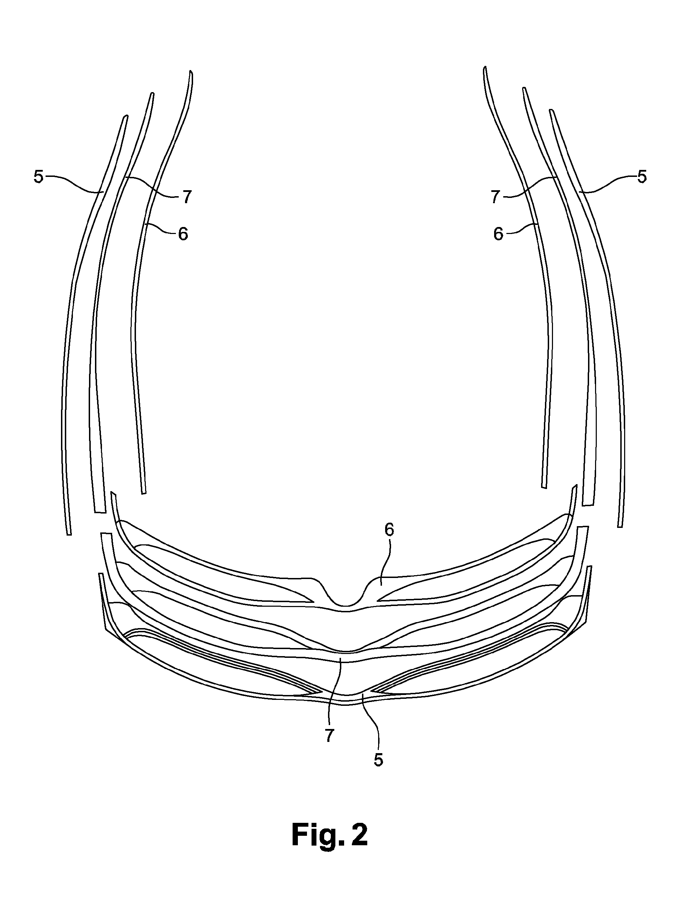

La figure 2 est une vue en éclaté de la figure 1.

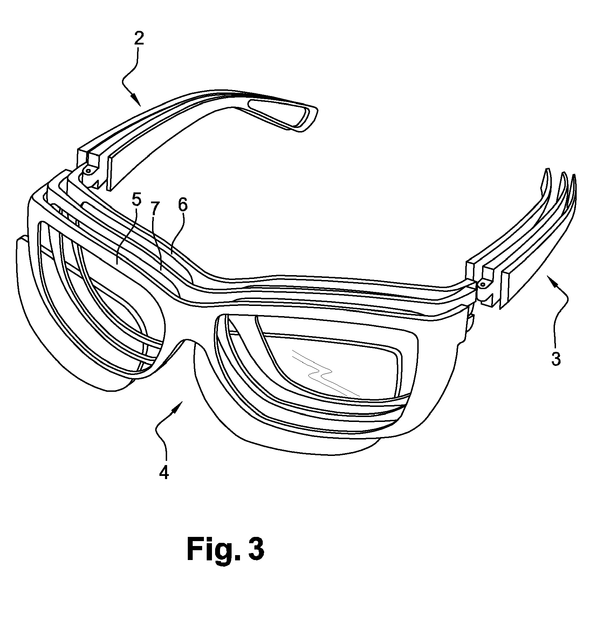

La figure 3 est une représentation schématique en perspective de la monture de lunettes de la figure 1.

### DESCRIPTION DETAILLEE DE L'INVENTION

L'invention concerne un procédé de fabrication d'un élément constituant une monture de lunettes (1), tel que par exemple, les branches (2, 3) et/ou la partie centrale (4) de la monture recevant les verres optiques.

Selon un premier mode de réalisation de l'invention, le procédé comprend tout d'abord une étape consistant en premier lieu à fabriquer, par moulage par injection de polyamide 12 mélangé avec un colorant liquide, deux couches (5, 6) de l'élément à fabriquer de la monture de lunettes. Les colorants peuvent être différents pour lesdites deux couches de l'élément à fabriquer.

Ces deux couches (5, 6) peuvent également être fabriquées simultanément dans deux moules distincts.

Le procédé selon l'invention comprend ensuite une étape consistant à fabriquer, par moulage par injection de polyamide 12 mélangé avec un colorant liquide, dans un troisième moule, une troisième couche (7) de l'élément à fabriquer, surmoulée par les première (5) et deuxième (6) couches disposées de part et d'autre de ladite troisième couche au sein de ce troisième moule. On parle alors de fabrication tri-injection.

Chacune de ces couches présente une épaisseur d'au moins 0,9 millimètre.

Selon ce procédé, on obtient un élément de monture de lunettes comprenant trois couches en polyamide 12, de couleurs identiques ou chacune différentes, dont les première et deuxième couches constituent des couches externes, et la troisième couche constitue une couche interne. La cohésion de l'ensemble ainsi obtenu résulte de la fusion, à tout le moins partielle de chacune des trois couches lors du surmoulage de la troisième couche.

L'élément obtenu est ensuite revêtu d'un vernis à base de polyuréthane pour protéger sa surface et lui donner également une finition brillante ou mate selon la demande.

L'invention nécessite l'utilisation de trois moules composés de grades d'acier les plus résistants contre l'usure, la corrosion, et la déformation due à la température de chauffe et à la pression de verrouillage exercée par la presse à injecter pour l'injection en tant que telle.

Selon une variante de l'invention, lesdites première (5) et deuxième (6) couches viennent surmouler un insert métallique plein ou percés d'orifices traversants, ces derniers étant destinés à permettre la migration de la matière plastique constitutive desdites première et deuxième couches.

Selon un second mode de réalisation de l'invention, on réalise également les trois couches par moulage par injection, de la même manière que pour le procédé précédemment décrit, à la réserve près que lesdites couches ne sont pas conformées selon la forme souhaitée de l'élément de la monture de lunettes à réaliser.

De fait, on obtient une plaque tri-couches, constituée par l'assemblage des deux couches externes et de la couche interne,

Cette plaque subit alors un usinage propre à conférer la forme souhaitée de l'élément de monture de lunettes à réaliser.

Comme il ressort de ce qui précède, l'invention permet la production en masse et selon une variété quasi infinie de couleurs, d'un élément d'une monture de lunettes. La fabrication est rentable.

En outre, l'invention présente l'avantage de réduire significativement les délais de réalisation de telles montures de lunettes, puisqu'aussi bien, l'acétate n'est pas utilisé, la manipulation de l'acétate étant traditionnellement plus long et difficile à mettre en oeuvre.

## Revendications

1. Procédé de fabrication d'un élément (2, 3, 4) entrant dans la constitution d'une monture de lunettes (1), ***caractérisé* en ce qu'**il comprend les étapes consistant :
- à fabriquer par moulage par injection de matière plastique deux couches (5, 6) de l'élément (2, 3, 4) à fabriquer de la monture de lunettes ;
- à surmouler à l'aide de ces deux couches (5, 6) une âme centrale (7), pour obtenir un élément de monture de lunettes comprenant trois couches dont les première et deuxième couches constituent des couches externes, et l'âme centrale constitue une couche interne.

2. Procédé de fabrication d'un élément entrant dans la constitution d'une monture de lunettes selon la revendication 1, ***caractérisé* en ce que** l'âme centrale (7) est réalisée en matière plastique.

3. Procédé de fabrication d'un élément entrant dans la constitution d'une monture de lunettes selon la revendication 2, ***caractérisé* en ce que** l'âme centrale (7) est réalisée par moulage par injection de matière plastique dans un troisième moule, constituant une troisième couche de l'élément à fabriquer, surmoulée des première (5) et deuxième (6) couches, ces dernières étant disposées de part et d'autre de ladite troisième couche.

4. Procédé de fabrication d'un élément entrant dans la constitution d'une monture de lunettes selon l'une des revendications 1 à 3, ***caractérisé* en ce que** les première et deuxième couches (5, 6) sont fabriquées dans deux moules distincts.

5. Procédé de fabrication d'un élément entrant dans la constitution d'une monture de lunettes selon l'une des revendications précédentes, ***caractérisé* en ce que** les couches injectées (5, 6, 7) sont colorées dans la masse de la matière fondue par l'usage de colorants liquides dépourvus de tout métal lourd.

6. Procédé de fabrication d'un élément entrant dans la constitution d'une monture de lunettes selon la revendication 3, ***caractérisé* en ce que** les première (5), deuxième (6), et troisième (7) couches sont obtenues par injection de matière polyamide, et notamment de polyamide 12.

7. Procédé de fabrication d'un élément entrant dans la constitution d'une monture de lunettes selon l'une des revendications 1 à 6, ***caractérisé* en ce que** chacune des trois couches est conformée par moulage à la forme souhaitée de l'élément à réaliser.

8. Procédé de fabrication d'un élément entrant dans la constitution d'une monture de lunettes selon l'une des revendications 1 à 6, ***caractérisé* en ce que** les trois couches sont assemblées sous la forme d'une plaque tri-couches, et **en ce que** la plaque ainsi obtenue est usinée aux fins de lui conférer la forme souhaitée de l'élément à réaliser.

9. Procédé de fabrication d'un élément entrant dans la constitution d'une monture de lunettes selon la revendication 1, ***caractérisé* en ce que** l'âme centrale est constituée d'un insert métallique plein ou pourvu d'orifices traversants et est surmoulé par lesdites première et deuxième couches.

10. Procédé de fabrication d'un élément entrant dans la constitution d'une monture de lunettes selon l'une des revendications précédentes, ***caractérisé* en ce que** l'élément fabriqué est ensuite revêtu d'un vernis, notamment à base de polyuréthane.

11. Elément entrant dans la constitution d'une monture de lunettes, tel que par exemple l'une des branches et/ou le support central des verres optiques, solaires ou de protection ***caractérisé* en ce qu'**il comprend deux couches externes en matière plastique surmoulées sur une troisième couche interne en matière plastique, ledit élément étant obtenu selon le procédé conforme à l'une des revendications 1 à 10.
